# EUROPEAN PATENT APPLICATION

(11) **EP 4 704 051 A1**
(43) Date of publication of application: **04.03.2026**
(21) Application number: 25154073.8
(22) Date of filing: 27.01.2025
(51) Int. Cl.: G06V 20/56

(54) **METHOD FOR GENERATING BIRD'S EYE VIEW FEATURES BY UTILIZING SIMILARTY BETWEEN FEATURES INCLUDING IMAGE CONTEXT AND MOBILITY DEVICE USING THE METHOD**

(30) Priority: 03.09.2024 KR 20240119014
(71) Applicant: Hyundai Motor Company, Seoul 06797 (KR); Kia Corporation, Seocho-gu, Seoul 06797 (KR)
(72) Inventor: Park, Jin Ho, 18280 Hwaseong-si, Gyeonggi-do (KR)
(74) Representative: Hoffmann Eitle

(57) **Abstract**

A method performed by an apparatus of a vehicle, the method includes: generating one or more image features from one or more images using an image analysis model; producing a reference BEV feature with reference direction information at a reference level and a height BEV feature with height direction information for each level by mapping the image features to a BEV grid; calculating a weight based on information in the reference BEV feature and the height BEV feature; and generating a single enhanced BEV feature by applying the calculated weight to the reference BEV feature and the height BEV feature.

## Description

### CROSS REFERENCE TO RELATED APPLICATION

The present application claims the benefit of priority to a Korean provisional application No 10-2024-0119014, filed September 3, 2024, the entire contents of which is incorporated herein for all purposes by reference.

### TECHNICAL FIELD

The present disclosure related to a method for generating bird's eye view features by utilizing similarity between features including an image context and a mobility device using the method, and more particularly, to a method for generating bird's eye view features by utilizing similarity, which is capable of generating an enhanced bird's eye view by using an image feature suitable for a bird's eye view grid at each predefined level according to a predetermined length interval, and a mobility device using the method.

### BACKGROUND

The matters described in this Background section are provided to enhance the understanding of the background of the disclosure and should not be taken as an acknowledgment that they correspond to prior art already known to those skilled in the art.
for safe and efficient autonomous driving, the necessity for developing an omni-directional recognition model is on the rise. As an example, for methodology of developing an omni-directional recognition model using a plurality of cameras, surround depth estimation, 3D occupancy prediction, and bird's eye view (BEV) perception are being used.

Among the above-described examples, the BEV perception method is highly useful because it is not only efficient but also contains sufficient information required for a target task (downstream task) such as path planning.

To perform BEV perception, a feature of image space needs to be mapped to BEV space. Mapping to BEV space means projecting a 2D image to 3D space, and a forward mapping method or a backward mapping method may be conventionally used to transform a dimension.

Forward mapping estimates depth information of an image feature and projects the image feature to a 3D space according to each pixel. On the other hand, backward mapping projects predefined points of a 3D space to an image space and employs a feature of a corresponding point.

However, as an example, because a method of generating a BEV feature by using backward mapping employs an image feature by projecting only a reference point of a BEV space, most image features are neglected and thus only a spare feature is employed.
Thus, when object information needs to be detected using a BEV feature, as reference points are concentrated on the ground surface, many image features affecting object detection are neglected, leading to performance degradation.

### SUMMARY

The present disclosure is technically directed to providing a method for generating bird's eye view features by utilizing similarity, which is capable of generating an enhanced bird's eye view by using an image feature suitable for a bird's eye view grid at each predefined level according to a predetermined length interval, and a mobility device using the method.

The technical problems solved by the present disclosure are not limited to the above technical problems and other technical problems which are not described herein will be clearly understood by a person having ordinary skill in the technical field, to which the present disclosure belongs, from the following description.

According to one or more example embodiments of the present disclosure, a method performed by an apparatus of a vehicle may include: generating at least one or more image features from at least one or more images through an image analysis model, producing a reference BEV feature including reference direction information corresponding to a reference level and a BEV feature including height direction information corresponding to each level respectively by mapping the image features and a BEV grid, calculating a weight based on information included in the reference BEV feature and the height BEV feature and generating a single enhanced BEV feature by reflecting the calculated weight in the reference BEV feature and the height BEV feature.

The image feature may be generated at multiple scales through operations between feature maps with different scales inferred from adjacent layers in the image analysis model. The producing of the reference BEV feature and the height BEV feature may generate the reference BEV feature and the height BEV feature corresponding to each of the image features by mapping the BEV grid and the at least one or more image features independently.

The mapping of the BEV grid may project a predefined reference point of each grid included in the BEV grid onto the image features based on a transform table that is generated based on geometric information of each camera used for capturing the images.

The reference BEV feature may be produced by projecting a reference point of each grid of the BEV grid defined in a reference direction based on the transform table including a concatenation relationship corresponding to the reference level onto the image features.

The height BEV feature may be produced at each interval by projecting a reference point of each grid of the BEV grid defined in the height direction based on the transform table including a concatenation relationship corresponding to each level of a height direction onto the image features.

The weight may be produced at each level based on a score that is calculated through an inner product of each element included in the reference BEV feature and the height BEV feature of each level.

The generating of the single enhanced BEV feature may comprise: calculating an aggregate weight by concatenating and element-wise adding the weight obtained by normalizing the score to a predetermined range and the weight of the reference level, calculating a similarity for each of all levels by computing a ratio of the weight and the weight of the reference level to the aggregate weight and generating the enhanced BEV feature by reflecting the similarity in the reference BEV feature and the height BEV feature of a corresponding level and performing element-wise addition.

The weight corresponding to the reference level may be set to a maximum value.

The similarity corresponding to the reference level may be set to a maximum value.

According to one or more example embodiments of the present disclosure, a mobility device may include: a memory configured to store at least one instruction and a processor configured to execute the at least one instruction stored in the memory based on data obtained from the memory, wherein the processor may be further configured to: generate at least one or more image features from at least one or more images through an image analysis model, produce a reference BEV feature including reference direction information corresponding to a reference level and a BEV feature including height direction information corresponding to each level respectively by mapping the image features and a BEV grid, calculate a weight based on information included in the reference BEV feature and the height BEV feature, generate a single enhanced BEV feature by reflecting the calculated weight in the reference BEV feature and the height BEV feature, and perform autonomous driving control by using the enhanced BEV feature.

According to the present disclosure, it is possible to provide a method for generating bird's eye view (BEV) features by utilizing similarity, which is capable of generating an enhanced bird's eye view by using an image feature suitable for a bird's eye view grid at each predefined level according to a predetermined length interval, and a mobility device using the method.

In addition, it is possible to generate a BEV feature by using an image feature including various image contexts.

Additionally, useful image features can be employed or synthesized according to each BEV grid. In addition, by using an enhanced BEV feature, it is possible to improve the performance of an AI model that performs a task related to autonomous driving.

The effects obtainable from the present disclosure are not limited to the above-mentioned effects, and other effects not mentioned herein will be clearly understood by those skilled in the art through the following descriptions.

### BREIF DESCRIPTION OF THE DRAWINGS

FIG. 1 shows an example of a view schematically showing constituent modules of a device implementing a method for generating a BEV feature according to an embodiment of the present disclosure.
FIG. 2 shows an example of a flowchart of a method for generating a BEV feature by using similarity according to another embodiment of the present disclosure.
FIG. 3 shows an example of a view showing a structure of a model actually implementing a method for generating a BEV feature by using similarity according to another embodiment of the present disclosure.
FIG. 4 shows an example of a structure of a model implementing another embodiment of the present disclosure to which a feature pyramid network is applied.
FIG. 5 shows an example of a transformation of dimensions using the backward mapping method.
FIG. 6 shows an example of a difference of information between a reference BEV feature and a height BEV feature.
FIG. 7 shows an example of a method for generating an enhanced BEV feature by calculating similarity according to an embodiment of the present disclosure.
FIG. 8 shows an example of visually illustrating a method for generating an enhanced BEV feature by calculating similarity.
FIG. 9 shows an example of data transmission and reception by a mobility device in communication with another device.
FIG. 10 shows an example of constituent modules of a mobility device according to the present disclosure.

### DETAILED DESCRIPTION OF THE INVENTION

Hereinafter , examples of the present disclosure are described in detail with reference to the accompanying drawings so that those having ordinary skill in the art may easily implement the present disclosure. However, examples of the present disclosure may be implemented in various different ways and thus the present disclosure is not limited to the examples described therein.

In describing examples of the present disclosure, well-known functions or constructions have not been described in detail since a detailed description thereof may have unnecessarily obscured the gist of the present disclosure. The same constituent elements in the drawings are denoted by the same reference numerals and a repeated or duplicative description of the same elements has been omitted.

In the present disclosure, when an element is simply referred to as being "connected to," "coupled to," or "linked to" another element, this may mean that an element is "directly connected to," "directly coupled to," or "directly linked to" another element, or that an element is connected to, coupled to, or linked to another element with an intervening element. In addition, when an element "includes" or "has" another element, this means that one element may further include another element without excluding another component unless specifically stated otherwise.

In the present disclosure, the terms first, second, etc. are only used to distinguish one element from another and do not imply the order or the degree of importance between the elements unless specifically stated otherwise. Accordingly, a first element in an example may be termed a second element in another example, and, similarly, a second element in an example could be termed a first element in another example, without departing from the scope of the present disclosure.

In the present disclosure, elements are distinguished from each other for clearly describing each feature, but this does not necessarily mean that the elements are separated. In other words, a plurality of elements may be integrated in one hardware or software unit, or one element may be distributed and formed in a plurality of hardware or software units. Therefore, even if not mentioned otherwise, such integrated or distributed examples are included in the scope of the present disclosure.

In the present disclosure, elements described in various examples do not necessarily mean essential elements, and some of them may be optional elements. Therefore, an example composed of a subset of elements described in an example is also included in the scope of the present disclosure. In addition, examples including other elements in addition to the elements described in the various examples are also included in the scope of the present disclosure.

The advantages and features of the present disclosure and the ways of attaining them should become apparent to those of ordinary skill in the art with reference to examples of the present disclosure described below in detail in conjunction with the accompanying drawings. The examples of the present disclosure, however, may be embodied in many different forms and should not be construed as being limited to the example examples set forth herein. Rather, the examples described herein are provided to make this disclosure more complete and to fully convey the scope of the present disclosure to those having ordinary skill in the art to which the present disclosure pertains.

In the present disclosure, each of the phrases such as "A or B," "at least one of A and B," "at least one of A or B," "A, B, or C," "at least one of A, B, and C," and "at least one of A, B, C, or a combination thereof" may include any one or all possible combinations of the items listed together in the corresponding phrase. In the present disclosure, expressions of location relations used in the present specification such as "upper", "lower", "left" and "right" are employed for the convenience of explanation, and when drawings illustrated in the present specification are inversed, the location relations described in the specification may be inversely understood. When a component, device, element, or the like of the present disclosure is described as having a purpose or performing an operation, function, or the like, the component, device, or element should be considered herein as being "configured to" meet that purpose or perform that operation or function.

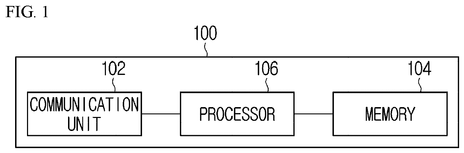

Hereinafter, referring to FIG. 1, the constituent modules of a device implementing a method for generating a BEV feature according to an embodiment of the present disclosure will be described. FIG. 1 is a schematic view showing constituent modules of a device implementing a method for generating a BEV feature according to an embodiment of the present disclosure.

Referring to FIG. 1, a device 100 (hereinafter, server) implementing a method for generating a BEV feature may include a communication unit 102, a processor 106, and a memory 104. Each component is not an indispensable component, an additional configuration may be provided or omitted, and one configuration may be included in or combined with another configuration so that a single configuration may perform a plurality of functions. For example, within a scope not violating the description below, a separate module for transforming a collected image to a BEV feature may be added apart from the processor 106. In addition, the processor 106 may include a plurality of modules implementing a method for generating a BEV feature according to another embodiment of the present disclosure.

Referring to FIG. 1, the server 100 may generate an image feature from a collected image through an image analysis model and generate a BEV feature by mapping the generated image feature and a three-dimensional BEV grid. Specifically, the server 100 may map the image feature and the three-dimensional BEV grid and project the image feature to a three-dimensional space, thereby generating a BEV feature. In addition, the server 100 may generate an enhanced BEV feature by comparing similarity between image contexts included in the image feature through a BEV transform module 305. In addition, the server 100 may perform a suitable task through the generated enhanced BEV feature. As an example, the server 100 may perform tasks such as object detection, semantic segmentation, depth estimation, and pose estimation by using an enhanced BEV feature. The tasks the server 100 may perform are not limited to the above-described examples.

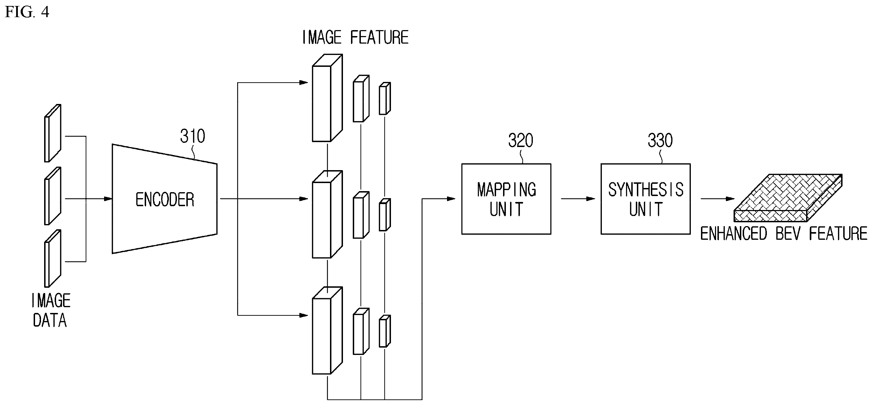

Specifically, the processor 106 of the server 100 may generate at least one or more image features by the BEV transform module 305 that has an image analysis model capable of analyzing a context of an image as an encoder 310. For the encoder 310, an image analysis model capable of processing a plurality of images simultaneously and generating a plurality of image features may be employed. For example, the encoder 310 may employ a convolutional neural network (CNN) structure or a transformer structure. In addition, the encoder 310 is based on an image analysis model with CNN structure and may generate a plurality of image features by employing a feature pyramid network (FPN) structure. In the present disclosure, an image analysis model used as the encoder 310 may be trained in advance. The BEV transform module 305 employing the encoder 310 with a FPN being applied will be described through FIG. 4.

Next, the processor 106 may map an image feature and a BEV grid by a mapping unit 320 to produce a reference BEV feature and a height BEV feature that include reference direction information corresponding to a reference level and height direction information corresponding to each level respectively. The level may refer to a height distinguished at a predetermined interval on a three-dimensional BEV grid, and an interval between levels may be set to be different according to a user's setting. For example, a reference level may mean a height corresponding to a ground surface, and each level may be set based on a predetermined interval from the ground surface. That is, a BEV grid according to the present disclosure may be generated at each level. This will be described in detail below.

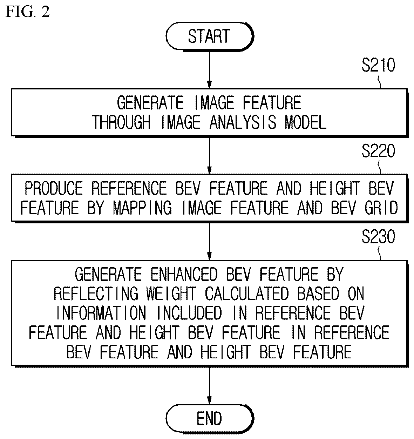

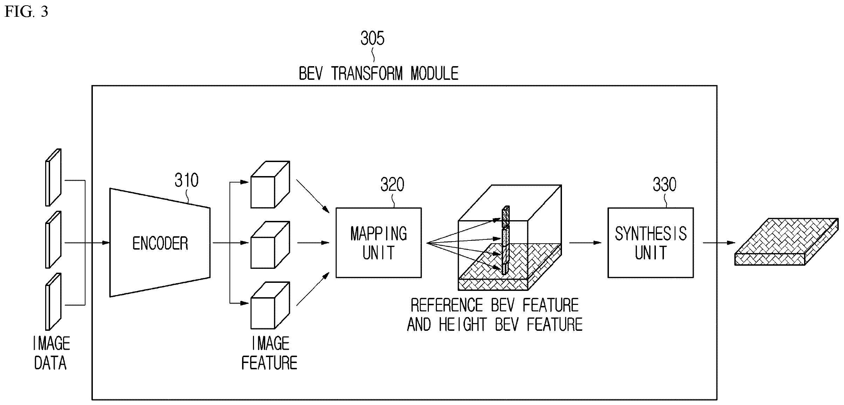

Next, the processor 106 may generate a single enhanced BEV feature by synthesizing the above-described BEV features through the synthesis unit 330. The above-described processing of the processor 106 will be described in detail through FIG. 2 and FIG. 3.

In the present disclosure, a model may be referred to by various terms such as a network, a neural network, a learning model and an artificial neural network.

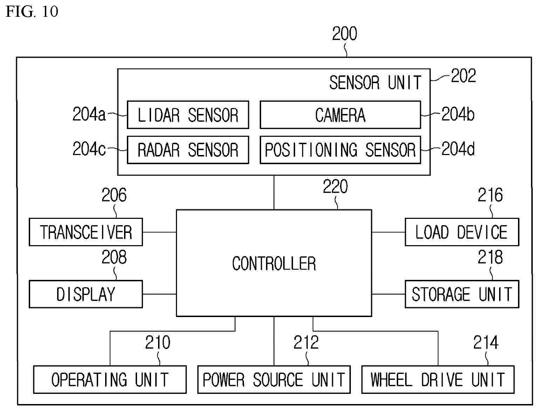

The server 100 may distribute the BEV transform module 305, which generates a single enhanced BEV feature considering similarity between image features employed by each BEV grid, to a mobility device (refer to 300 of FIG. 10), and the mobility device 300 may use the distributed BEV transform module 305 for driving control.

The mobility device 300 may refer to a device capable of moving to a specific point. The mobility device 300 may be any one of a ground vehicle driven on the ground and a device such as a moving robot controlled autonomously or remotely and a working robot for a specific purpose. In addition, the mobility device 300 is not limited to the ground mobility device but may be, for example, an aerial mobility device, a water mobility device for water transportation or an underwater mobility device (e.g., submarine). The mobility device 300 may operate autonomously or manually. The autonomously-driven mobility device 300 may be implemented by either semi-autonomous driving or full-autonomous driving. Full autonomous driving may be provided as autonomous moving under the complete control of a controller of the mobility device 300 without a user's intervention even in an uncertain driving situation. Semi-autonomous driving may be provided as autonomous moving that requires a driver's intervention in a specific driving situation. In such situations, semi-autonomous driving may switch control from the mobility device 300's controller to the user, enabling manual driving. According to the autonomous driving levels defined by the Society of Automotive Engineers (SAE), semi-autonomous driving may correspond to the autonomous driving levels 1 to 4, and full autonomous driving may correspond to the level 5.

The server 100 may be a device such as a server provided separately from the mobility device 300 to be operated by, for example, a vehicle manufacturer or operated by a management organization providing a service of autonomous driving. If the server 100 is a server operated by a vehicle manufacturer or a management organization supporting autonomous driving, the server 100 may receive connected data of the mobility device 300 or transmit data necessary for autonomous driving. In order to support autonomous driving or various services of the mobility device 300, the server 100 may transmit various information and software modules used for controlling the mobility device 300 to the mobility device 300 in response to a request and data transmitted from the mobility device 300 and a user device. This disclosure will primarily describe the server 100's processing in relation to a method for generating a BEV feature according to an embodiment.

The communication unit 102 of the server 100 may support mutual communication with mobility devices 300 and 400 and an ITS device 300. In the present disclosure, the communication unit 102 may be a communication interface that receives various data and networks (or algorithms) used for generating the BEV transform module 305 supporting the driving and convenience functions of the mobility device 300 and transmits information and a network related to the BEV transform module 305 to the mobility device 300. In addition, the communication unit 102 may be a communication module that receives data generated or stored during driving from the mobility device 300 and transmits information for supporting driving such as map information, environmental information for recognizing an object around the mobility device 300, traffic information and weather information to the mobility device 300. The communication unit 102 may also serve as a communication module that transmits applications related to driving and convenience functions.

The memory 104 may store a program and various data for controlling the server 100, load the program at a request of the processor 106, or read and record the data. The memory 104 may manage the BEV transform module 305 and image data or sequential image data used for the BEV transform module 305. The BEV transform module 305 may include functional modules 310, 320, and 330, illustrated in FIG. 3, as described below. The image data may include images collected from the plurality of mobility device 300 and 400 and/or a typical DB for learning data, depth maps and depth information provided in a point cloud format. Apart from the above-described data, the memory 104 may also have an application for implementing driving and convenient functions of the mobility device 300, map information, traffic information, weather information and other various types of information affecting driving.

The processor 106 may provide overall control of the server 100. The processor 106 may be configured to execute applications and instructions stored in the memory 104. Specifically, using the above-described image, the processor 106 may control the server 100 to establish the processing of the BEV transform module 305 and to distribute the established BEV transform module 305 to the mobility device 300.

To establish the processing of the BEV transform module 305, the processor 106 may determine an image analysis model to be employed as the encoder 310, use a pre-trained image analysis model, or determine learnable parameters for the image analysis model through training. In addition, to map an image feature and a BEV grid, the processor 106 may set a transform table including a concatenation relationship in which a reference point of each grid cell in the BEV grid is projected to the image feature. Specifically, the processor 106 may use a predefined mapping lookup table as a transform table, and the mapping lookup table may include a BEV grid at each of all the levels including a reference level and a concatenation relationship corresponding to an image feature at each level. The mapping lookup table may vary based on the geometric information of a camera mounted on the mobility device 300. Herein, the geometry information may include an intrinsic parameter and an extrinsic parameter of the camera.

In addition, the processor 106 may receive feedback information according to an operation of the transform BEV module 305 distributed to the mobility devices 300 and 400, the above-described image data and a same type of image from the mobility devices 300 and 400 and update the BEV transform module 305 based on the received information and data. The processor 106 may distribute the updated BEV transform module 305 to the mobility devices 300 and 400.

In addition, the processor 106 may generate at least one or more image features from at least one or more images through the BEV transform module 305 and produce a reference BEV feature and a height BEV feature including reference direction information corresponding to a reference level and height direction information corresponding to each level respectively by mapping the image feature and the BEV grid. Next, the processor 106 may calculate a weight based on information included in the reference BEV feature and the height BEV feature and generate a single enhanced BEV feature by reflecting a similarity derived based on the weight in the reference BEV feature and the height BEV feature.

In addition, the processor 106 may perform task processing based on the enhanced BEV feature that is generated by using the established BEV transform module 305.

In addition, the processor 106 may perform processing to support the driving and convenience functions of the mobility device 300. In the present disclosure, as an example, the processor 106 may be implemented as a single processing module. As another example, the above-described processing may be distributively performed in a plurality of processing modules, and the processor 106 may commonly refer to a plurality of processing modules in the present disclosure.

Hereinafter, a method for generating an enhanced BEV feature by using similarity between BEV features according to another embodiment of the present disclosure will be described in detail with reference to FIG. 2 and FIG. 3.

FIG. 2 is a flowchart of a method for generating a BEV feature by using similarity according to another embodiment of the present disclosure. FIG. 3 is a view showing a structure of a model actually implementing a method for generating a BEV feature by using similarity according to another embodiment of the present disclosure. The model actually implementing the method for generating a BEV feature in FIG. 3 may be a software module processed by the processor 106, and the processor 106 may process requests from modules listed in FIG. 3.

In the present disclosure, processing of the BEV transform module 305 according to an embodiment is described to be performed only in the server 100, but the BEV transform module 305 described below may also be processed by being distributed between the server 100 and another device within a scope deviating from the description below. For example, the other device may be a server and/or the mobility devices 300 and 400. Hereinafter, the processor 106 of the server 100 may be abbreviated to the server 100, for convenience of explanation, or these terms may be used interchangeably.

Referring to FIG. 2, the processor 106 of the server 100 generates an image feature through an image analysis model serving as the encoder 310 (S210).

Image data used in this disclosure may be static images obtained sequentially from a camera mounted on the mobility device 300 or another device, and/or image data representing object motion through consecutive frames. In addition, image data may be an image of a changing environment around an ego-vehicle obtained by a mono camera mounted on the ego-vehicle with the perspective of the driving ego-vehicle or an image of a surrounding environment that is changing according to each of multiple cameras mounted on the ego-vehicle.

When a convolutional neural network (CNN) structure is used as an image analysis model, an image feature may mean a feature map that analyzes a feature of input image data. As another example, when a transformer structure is used as an image analysis model, an image feature may mean information of each patch of image data divided into predetermined patches, a relationship between patches, and a global image context including the context of the image. Structures to be employed as image analysis models are not limited thereto and may include any artificial neural network structure that is available for performing tasks such as object detection, semantic segmentation, depth estimation and pose estimation within a scope of the present disclosure.

Additionally, when an image analysis model employs a CNN structure and applies a feature pyramid network structure, an image feature may be a result that is produced by computing feature maps with different scales inferred from each of adjacent layers among layers constituting a CNN. That is, an image feature may be generated at a plurality of different scales.

As an example, a feature pyramid network may generate image feature maps with multiple resolutions or scales by extracting a feature map in a bottom-up pathway and applying upsampling to the extracted feature map in a top-down pathway. In addition, an upsampled feature map may be subject to downsampling by maximum or average pooling in order to improve quality and prevent an increased amount of operation from increasing the load of a memory. A finally generated image feature may have a smaller spatial dimension than an input image. As an example, an image with [N, H, W, 3] may be transformed into image feature maps with [N, H/s, W/s, C]. In this case, s represents a downscaling factor that reduces the size to the resolution of the target final output, as designated by user settings.

Specifically, a feature pyramid network may extract a feature map from each layer of a CNN-structured neural network that is a backbone. For example, when ResNet is employed as backbone, the processor 106 may extract a feature map from predetermined layers conv2, conv3, conv4 and conv5 of ResNet (bottom-up pathway). Next, the processor 106 may upsample a feature map extracted from the deepest layer conv5 among the predetermined layers, which are designated for extracting feature maps, and combine the upsampled feature map with a feature map extracted from an adjacent layer conv4. Through this process, the processor 106 may generate multiple image features at different scales.

In addition, the above description is merely one example of the processing of ResNet to which a feature pyramid network available in the present disclosure is applied, and an image analysis model, to which the feature pyramid network available in the present disclosure is applied, and processing of the model are not limited thereto. That is, with the scope of the present disclosure not being deviated, it is natural that any number of image feature maps can be generated.

The BEV transform module 305 according to the present disclosure may be independently applied according to each of image features with different scales that are generated by the encoder 310 to which a feature pyramid network is applied. For clarity, this will be explained with reference to FIG. 4.

FIG. 4 is a view showing a structure of a model implementing another embodiment of the present disclosure to which a feature pyramid network is applied. In FIG. 4, each of the mapping unit 320 and the synthesis unit 330 is expressed as a single configuration but may be equipped with a plurality of configurations corresponding respective image features at each scale, and an image feature of each scale may be processed. The encoder 310 produces image features with different scales according to each of input image data. However, as the processing of a feature pyramid network applied to the encoder 310 is applied to each of image data in a same way, the sizes of image features with different scales produced from each of the image data may match each other. Next, among the image features with different scales produced from each of the image data, the mapping unit 320 may map an image feature and a BEV grid that match each other in size. Finally, the synthesis unit 330 may synthesize an enhanced BEV feature for each image feature that matches in size. Detailed processing of the mapping unit 320, which maps an image feature and a BEV grid, will be described below. Similarly , the processing of the synthesis unit 330 will be described below.

Back to FIG. 2 again, the processor 106 may produce a reference BEV feature and a height BEV feature by mapping an image feature and a BEV grid through the mapping unit 320 (S220).

More specifically, the processor 106 projects a reference point of each grid cell included in a BEV grid, which is predefined to map an image feature and a BEV grid, on an image feature based on a transform table. The transform table may be generated based on geometry information of at least one or more cameras that are used to obtain image data.

A BEV grid may be defined in advance. For example, the processor 106 may define a BEV grid defined in a reference direction and a BEV grid corresponding to each level in height direction in advance. For example, for the reference BEV grid defined in the reference direction, the processor 106 may set a longitudinal size to [-50m, 50m], a lateral size to [-50m, 50m], a height to 0m and a grid resolution to 1m. The grid resolution refers to a size of each grid cell in a BEV grid. The size of the reference BEV grid thus defined is [100, 100, 1] (longitudinal, lateral, height), and there may be 100* 100* 1 grid cells. The longitudinal size, lateral size, height and resolution of a reference BEV grid may be different according to a user setting or a system setting, and an available unit may also be changed.

In addition, as an example, a reference BEV grid, which is defined at a reference level corresponding to a ground surface refers only to an image feature with a height of 0m. Accordingly, the processor 106 may set levels at a predetermined interval in height direction and define a height BEV grid corresponding to each level of the height direction. The interval between levels may be set differently based on user settings.

The processor 106 may define a reference point of each grid cell and define, as an example, a center point of each grid cell as a reference point. A method of defining a reference point is not limited to the above-described example. A reference point thus defined may be expressed by (x, y, 0) in a vehicle coordinate system or a world coordinate system. In this case, the 0 means that a level corresponding to a ground surface (or reference level) is defined as a reference point. Accordingly, a reference point of each grid cell of a height BEV grid at each level may be defined as (x, y, level).

Next, the processor 106 projects a reference point of each grid cell on an image feature based on a transform table. Specifically, the processor 106 sets a transform table including a concatenation relationship for projecting a reference point of each grid cell on an image feature to map an image feature and a BEV grid and may use a predefined mapping lookup table as a transform table. The mapping lookup table may be differently predefined according to a reference BEV grid and each height BEV grid that is defined at each level in a corresponding height direction. In addition, the mapping lookup table may be defined based on geometry information of a camera mounted on the mobility device 100 to be distributed.

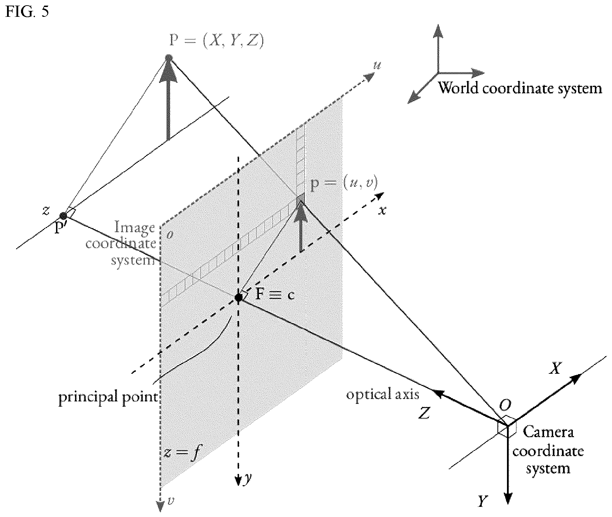

The mapping lookup table may include a transform matrix for coordinate transformation from a vehicle or world coordinate system to a camera coordinate system, as well as a transform vector. The transform matrix and vector may be defined by the extrinsic geometry of the mobility device 100. In this case, the extrinsic geometry may be obtained in advance by calibration. In addition, the mapping lookup table may include a matrix for projecting an image feature onto an image plane in a camera coordinate system, and the matrix may be defined by an intrinsic parameter of the mobility device 100. Likewise, the intrinsic parameter may be obtained in advance by calibration. Hereinafter, for convenience of understanding, a method of projecting a reference point will be described with reference to FIG. 5. FIG. 5 is a view exemplifying transformation of dimensions using the backward mapping method.

Referring to FIG. 5, a coordinate (X, Y, Z) of an object defined in a world coordinate system may be transformed to a camera coordinate system by a transform matrix generated based on the extrinsic geometry of a camera. Next, the coordinate may be projected onto a coordinate (u, v) of an image plane by a matrix that is generated based on intrinsic geometry. Likewise, a reference point (x, y, 0) of a BEV grid cell may be projected onto an image feature by the above-described processing.

On an image plane of an image feature, the position of each pixel is expressed by an integer, but a coordinate of a projected reference point may be expressed by a real number. In this case, in order to generate a reference BEV feature, the processor 106 may have to reflect not a single image pixel but a plurality of pixels in the projected reference point. The processor 106 may consider a plurality of pixels in the projected reference point through bilinear interpolation.

By the above-described method, the processor 106 may project reference points of a reference BEV grid and a height BEV grid onto an image feature by using a transform table based on a predefined mapping lookup table and thus generate a reference BEV feature and a height BEV feature. The reference BEV feature may be generated based on a transform table including a concatenation relationship corresponding to a reference level, while the height BEV feature may be generated at each interval of each level based on a transform table including a concatenation relationship corresponding to each level of height direction.

Next, the processor 106 generates an enhanced BEV feature using the synthesis unit 330 by applying a weight, calculated based on information from the reference BEV feature and the height BEV feature, to these features (S230). For a method of fusing a reference BEV feature and a height BEV feature, it is possible to use a method of using a neural net layer after addition or concatenation, but the above-described method has a problem in that different image features can contaminate a BEV feature.

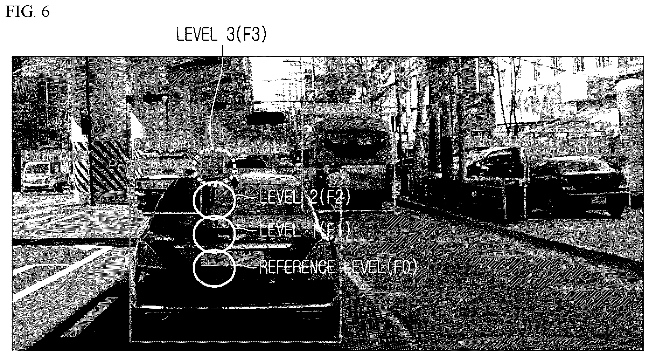

For clarity of understanding, this will be described through FIG. 6. FIG. 6 is a diagram visually illustrating a difference of information between a reference BEV feature and a height BEV feature.

Referring to FIG. 6, an object indicated by a reference point at the reference level (F0) corresponding to the ground surface, and objects indicated by reference points at Level 1 (F1) and Level 2 (F2), are the same vehicle. That is, reference points up to Level 2 are present in a specific object in an image and indicate a same object (in the case of FIG. 6, a vehicle), but a reference point of Level 3 (F3 of FIG. 6) is shown to be projected onto a background or another object. That is, if a feature of an image including different information from an actual position is processed by simple addition or concatenation, task processing performance using a BEV feature thus generated may be degraded.

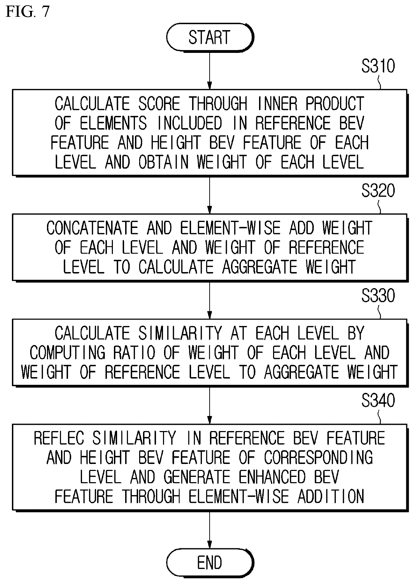

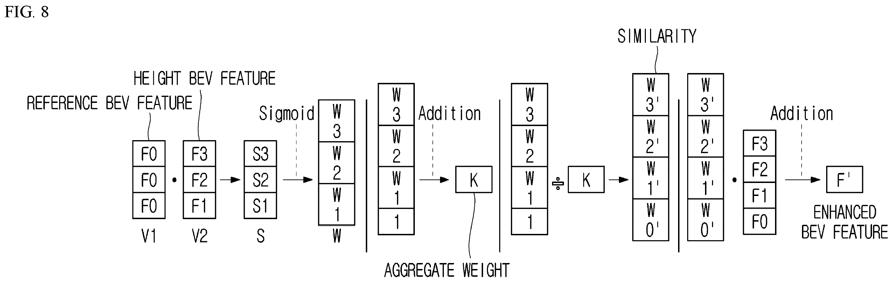

Back to FIG. 2 again, to consider the sameness of an object indicated by a reference point, the processor 106 calculates a weight based on information included in a reference BEV feature of a reference level and a height BEV feature generated at each level. Specifically, the processor 106 produces a weight by comparing the reference BEV feature with the height BEV feature. The weight may be obtained at each level because it is produced by comparing the reference BEV feature and a height BEV feature of each level. As for the assumption of the above-described processing, the processor 106 may trust a reference BEV feature and use it as a criterion for determining the sameness as an object indicated by a height BEV feature. The detailed processing for this will be explained with reference to FIG. 7 and FIG. 8. FIG. 7 is a view showing a method for generating an enhanced BEV feature by calculating similarity according to an embodiment of the present disclosure. FIG. 8 is a view showing an example visually illustrating a method for generating an enhanced BEV feature by calculating similarity.

Referring to FIG. 7, the processor 106 calculates a score through an inner product of elements included in a reference BEV feature and a height BEV feature of each level and obtains a weight of each level (S310).

For clarity of understanding, the processing of each step of FIG. 7 will be described with reference to FIG. 8. FIG. 8 exemplifies calculation using a single grid cell of a BEV feature. Naturally, all grid cells, not just a single grid cell, may also be calculated simultaneously. The processor 106 configures a feature vector set (V1 and V2 of FIG. 8) to produce a weight based on a reference BEV feature (F0 of FIG. 8) and height BEV features generated at each level (F1, F2 and F3 of FIG. 8). The processor 106 matches sizes by concatenating reference BEV features in order to obtain an inner product of a reference BEV feature of a reference level and a height BEV feature. Herein, a grid cell of each BEV feature may include all the elements included in a height H, a width W and a channel C of each of a plurality of image features.

Next, the processor 106 calculates a score by calculating an inner product of a feature vector set V1, which contains a set of reference BEV features with matched sizes, and a feature vector set V2 that combines height BEV features of respective levels. Accordingly, scores (S1, S2 and S3 of FIG. 8) may be produced to correspond to each level. Next, the processor 106 normalizes the produced scores to a predetermined range. As an example, the processor 106 may normalize the scores between 0 and 1 by using a sigmoid function. A function, which the processor 106 may use to normalize the scores to a predetermined range, is not limited to the above-described example. Thus, the processor 106 may finally obtain a weight at each level (W1, W2 and W3 of FIG. 8).

Next, the processor 106 concatenates and element-wise adds a weight of each level and a weight of a reference level to calculate an aggregate weight (S320). As an example, a weight of the reference level may be set to 1. Specifically, since the processor 106 normalizes scores between 0 and 1, the weight of the reference level used in the reference BEV feature may be set to 1 for reliability. At step S310, where a weight is calculated, a value of a weight of a reference level may be differently set according to a normalization range of weight. For example, when a weight is normalized between 0 and 10, a weight of a reference level may be set to 10, which may be modified according to a user setting or a system setting. That is, as the processor 106 may consider a reference BEV feature as ground truth when comparing the reference BEV feature and a height BEV feature, the processor 106 may set a weight of a reference level to a maximum value.

Next, the processor 106 concatenates and element-wise adds a weight of each level (W1, W2 and W3 of FIG. 8) and the weight of the reference level to finally calculates an aggregate weight.

Next, the processor 106 calculate a similarity at each level by computing a ratio of a weight of each level and the weight of the reference level to the aggregate weight (S330). The processor 106 calculates the aggregate weight (K of FIG. 8) by using weights of the reference level and each level and derives a similarity at each level and thus may consider a proportion of specific object information of an image feature included in each BEV feature at each level.

Specifically, the processor 106 calculates a similarity (W'0, W'1, W'2 and W'3 of FIG. 8) for each of all the levels by dividing weights of all the levels by the aggregate weight. The processor 106 may set a similarity of the reference level to a maximum value to consider the reference BEV feature of the reference level as ground truth.

Next, the processor 106 reflects the similarity in the reference BEV feature and height BEV feature of a corresponding level and generates an enhanced BEV feature through element-wise addition (S340).

Specifically, the processor 106 calculates an inner product of a similarity calculated for each level and a BEV feature of a corresponding level. In this case, the processor 106 may generate a vector by concatenating the reference BEV feature and the height BEV feature, then calculate the inner product with a vector concatenating the similarity calculated at each level.

As image features corresponding to a same object region in an image are composed of similar values, a BEV feature indicating a same object may reflect a relatively higher similarity than a BEV feature indicating another object.

Finally, the processor 106 generates an enhanced BEV feature through element-wise addition. As the processor 106 uses relatively low-computational tools such as normalization, element-wise addition and inner product to generate an enhanced BEV feature, a memory size required for acquiring a weight and a similarity is reduced.

In addition, as the processor 106 considers a height BEV feature, more abundant image features may be used as compared with using only a reference BEV feature of a reference level. Furthermore, as an image feature including more diverse image contexts is used for a same object and a same region, task execution performance may be improved.

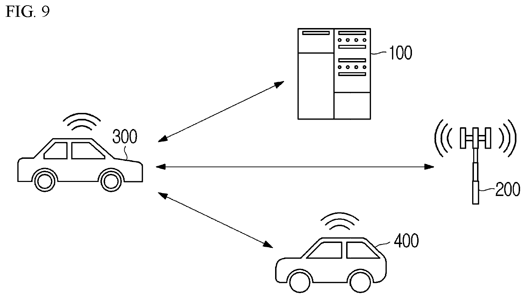

FIG. 9 is a view exemplifying data transmission and reception by a mobility device in communication with another device.

As described above in FIG. 1, the mobility device 300 may refer to a device capable of moving to a specific point. In the present disclosure, the mobility device 300 is described by an example of a vehicle driven on the ground, but the present disclosure may also be applied to a mobility device for air or water transportation. As described in FIG. 1, the mobility device 300 may be controlled via autonomous driving, which can be implemented as semi-autonomous or full-autonomous driving.

The mobility device 300 may be driven based on electric energy or fossil energy. In the case of electric energy, for example, the mobility device 300 may be a pure battery-based mobility driven only by a high-voltage battery or employ a gas-based fuel cell as an energy source. In addition, the fuel cell may use various types of gas capable of generating electric energy, and for example, the gas may be hydrogen. However, without being limited thereto, various gases are applicable. In the case of fossil energy, the mobility device 300 is driven based on fuels such as gasoline, diesel, or liquefied gas, and may be equipped with an engine that drives a wheel drive unit 214 by combustion of the fuel. The engine may be included in a power source unit 212 from a perspective of providing a driving torque of a wheel to the wheel drive unit 214. As another example, the mobility device 300 may be driven by a hybrid scheme of electric energy and fossil energy.

Additionally, the mobility device 300 may communicate with other devices 100 and 200 or another mobility device 400. For example, another device may include the server 100 for supporting various control, state management and driving of the mobility device 300, the ITS device 200 for receiving information from an intelligent transportation system (ITS), and various types of user devices. For example, as described in FIG. 1, the server 100 may be an external device operated by a vehicle manufacturer or a management organization providing an autonomous driving service.

For example, the ITS device 200 may be a road side unit (RSU), and the ITS device 200 may assist a user in driving their vehicle or support autonomous driving of the mobility device 300 by exchanging vehicle recognition data, driving control and situation data, environment data surrounding a vehicle, and map data through V2I with the mobility device 300. Through V2V with the other mobility device 400, the mobility device 300 may support a driver's driving his own car or autonomous driving by exchanging the above-listed data.

The mobility device 300 may communicate with another vehicle or another device based on cellular communication, wireless access in vehicular environment (WAVE) communication, dedicated short range communication (DSRC) or short range communication, or any other communication scheme.

For example, the mobility device 300 may use LTE as a cellular communication network, a communication network such as 5G, a WiFi communication network, a WAVE communication network, and the like to communicate with the server 100, the ITS device 200, and another mobility device 400. Alternatively, DSRC used in the mobility device 300 may be used for mobility-to-mobility communication. A communication scheme among the mobility device 300, the server 100, the ITS device 200, another mobility device 400, and a user device is not limited to the above-described embodiment.

FIG. 10 is a view schematically showing constituent modules of a mobility device according to the present disclosure. The mobility device 300 shown in FIG. 10 exemplifies a ground vehicle.

The mobility device 300 may include a sensor unit 202, a transceiver 206 and a display 208.

The sensor unit 202 may be equipped with various types of detectors for sensing various states and situations occurring in external and internal environments of the mobility device 300 and for identifying location information of the mobility device 300. That is, the sensor unit 202 may be configured as a multi-sensor module including heterogeneous sensors to obtain sensing data detected from each of the sensors.

Specifically, the sensor unit 202 may be equipped with a LiDAR sensor 204a, a camera 204b as a video sensor, and a radar sensor 204c for recognizing dynamic and static objects present around the mobility device 300 and have a positioning sensor 104d capable of obtaining location information of a vehicle. The sensor unit 202 may obtain sensor data including three-dimensional recognition data, perception/observation data, and positioning information by the above-described sensors.

The LiDAR sensor 204a may observe the surrounding environment using laser scanning and perceive the three-dimensional shape of objects. The camera 204b may obtain two-dimensional image data about a surrounding environment and objects of the mobility device 300 or an image (or image data) with depth information in time series. The camera 204b may be installed in a plurality of portions of the mobility device 300 so that a plurality of images or a multi-view may be obtained for the surrounding environment of the mobility device 300. That is, the camera 204b may obtain information on a surrounding environment that is not only in time series but also in succession from the perspective of the mobility device 300.

For example, the radar sensor 204c may irradiate an electromagnetic wave with a predetermined wavelength and thus detect a behavior of an object based on an electromagnetic wave reflected from the object. For example, the behavior of an object may include the presence of the object, whether the object moves, a distance between the mobility device 300 and the object, a speed of the object, and a movement direction.

Apart from the positioning sensor 104d, the sensor unit 202 may be equipped with a gyro sensor, an acceleration sensor, a wheel sensor, an odometer, a speed sensor and the like, in order to identify its own location, driving position, and speed. In addition, to monitor a user inside the mobility device 300, a condition of an occupant, and an operating situation of an internal device of the mobility device 300 that a user is capable of maneuvering, the sensor unit 202 may have an inward-facing image sensor, a biosensor for detecting biosignals of a driver and an occupant, and various detection modules for detecting the operation and state of an internal device.

The present disclosure mainly describes sensors of the sensor unit 202 referred to for description of an embodiment but may further include a sensor for detecting various situations not listed herein.

The transceiver 206 may support mutual communication with the server 100, the ITS device 200, and the neighbor mobility device 400. In the present disclosure, the transceiver 206 may transmit data generated or stored during driving to the server 100 and receive data and software modules transmitted from the server 100. In the present disclosure, the mobility device 300 may transmit and receive data used in the method according to the present disclosure to and from the outside through the transceiver 206.

The display 208 may serve as a user interface. By the controller 106, the display 208 may display an operating state and a control state of the mobility device 300, path/traffic information, information on an energy remaining quantity, a content requested by a driver, and the like to be output. The display 208 may be configured as a touch screen capable of sensing a driver input and receive a request of a driver indicated to the processor 106.

Additionally , the mobility device 300 may include an operating unit 210, a power source unit 212, the wheel drive unit 214, and a load device 216.

The operating unit 210 may be equipped with at least one module for implementing a driving operation and perform at least one driving operation of longitudinal control like acceleration/deceleration and transverse control like steering. The operating unit 210 may be equipped with not only a pedal and a steering wheel accepting a user's request for the control but also various operating modules for generating a driving operation according to the request in the wheel drive unit 214.

The power source unit 212 may generate and supply power and electricity used for a driving power system like the wheel drive unit 214 and the load device 216. In case the mobility device 300 is driven based on electric energy, for example, the power source unit 212 may be configured as an electric battery or be configured as a combination of an electric battery and a fuel cell for charging the battery. In the case of a combination of an electric battery and a fuel cell, the power source unit 212 may include a tank for storing the material used to generate power, such as hydrogen gas.. If the mobility device 300 is driven based on fossil energy, the power source unit 212 may be configured as an internal combustion engine.

The wheel drive unit 214 may include a plurality of wheels, a driving force transfer module for generating and giving a driving force to wheels or for transferring a driving force, a braking module for decelerating the driving of wheels, and a steering module for realizing transverse control of wheels. If the mobility device 300 is driven based on electric energy, a driving force transfer module may be configured as a motor module that generates a driving force based on electric power output from an electric battery. If the mobility device 300 is operated based on fossil energy, a driving force transfer module may include a transmission and a gear module that transfer power of an internal combustion engine.

In the present disclosure, the operating unit 210 and the wheel drive unit 214 may constitute an actuating unit that externally implements a driving motion, a driving pose and the like by transferring power generated from the power source unit 212. In the present disclosure, the actuating unit is referred to as an actuator, and these terms may be used interchangeably.

The load device 216 may be an auxiliary equipment mounted on the mobility device 300, which consumes power supplied from the power source unit 212 by use of an occupant or a user. In the present disclosure, the load device 216 may be a type of electric device for non-driving purposes excluding a driving power system like the wheel drive unit 214. For example, the load device 216 may be an air-conditioning system, a light system, a seat system, and various devices installed in the mobility device 300.

In addition, the mobility device 300 may include a storage unit 218 and a controller 220.

The storage unit 218 may store an application and various data for controlling the mobility device 300, load the applications at a request of the controller 220, or read and record the data. In the present disclosure, the storage unit 218 may receive and manage the BEV transform module 305 from the server 100. In addition, the storage unit 218 may receive and manage information necessary for driving such as map information, traffic information, weather information and accident information.

The controller 220 may perform overall control of the mobility device 300. The controller 220 may be configured to execute an application and instructions stored in the storage unit 218. Specifically, the controller 220 may use the BEV transform module 305 stored in the storage unit 218 to perform tasks such as semantic segmentation and object detection by using information from the sensor unit 202. The controller 220 may use various data recognized from the LiDAR sensor 204a, the camera 204b, the radar sensor 204c and the positioning sensor 204d and an output result of the BEV transform module 305 for autonomous driving control. Specifically, the controller 220 may use a fused grid map produced by the stored BEV transform module 305 as input data of an AI model used for the autonomous driving control.

In the present disclosure, as an example, the controller 220 may be implemented as a single processing module. Alternatively, the above-described processes may be handled by being distributed among a plurality of processing modules, and the controller 220 may commonly refer to a plurality of processing modules.

While the methods of the present disclosure described above are represented as a series of operations for clarity of description, it is not intended to limit the order in which the steps are performed. The steps described above may be performed simultaneously or in a different order as necessary. In order to implement the method according to the present disclosure, the described steps may further include different or other steps, may include remaining steps except for some of the steps, or may include other additional steps except for some of the steps.

The various examples of the present disclosure do not disclose a list of all possible combinations and are intended to describe representative aspects of the present disclosure. Aspects or features described in the various examples may be applied independently or in combination of two or more.

In addition, various examples of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of this disclosure includes software or machine-executable commands (e.g., an operating system, applications, firmware, programs) for enabling operations according to the described methods, as well as non-transitory computer-readable media storing such software or commands for execution on an apparatus or computer.

## Claims

1. A method performed by an apparatus of a vehicle, the method comprising:
using a processor to:
generate at least one or more image features from at least one or more images through an image analysis model;
produce a reference BEV feature including reference direction information corresponding to a reference level and a BEV feature including height direction information corresponding to each level by mapping the image features and a BEV grid;
calculate a weight based on information included in the reference BEV feature and a height BEV feature; and
generate a single enhanced BEV feature by reflecting the calculated weight in the reference BEV feature and the height BEV feature.

2. The method of claim 1, wherein the image feature is generated at a plurality of different scales through an operation between feature maps at different scales derived from an adj acent layer among layers constituting image analysis model using the processor.

3. The method of claim 1 or 2, wherein the producing of the reference BEV feature and the height BEV feature generates the reference BEV feature and the height BEV feature for each of the image features by mapping the BEV grid and the at least one or more image features independently using the processor.

4. The method of one of claims 1 to 3, wherein the mapping of the BEV grid projects a predefined reference point of each grid cell included in the BEV grid onto the image features based on a transform table that is generated based on geometry information of each camera used for capturing the images using the processor.

5. The method of claim 4, wherein the reference BEV feature is produced by projecting a reference point of each grid cell in the BEV grid defined in a reference direction based on the transform table including a concatenation relationship corresponding to the reference level onto the image features using the processor.

6. The method of claim 4, wherein the height BEV feature is produced at each interval by projecting a reference point of each grid cell in the BEV grid defined in a height direction based on the transform table including a concatenation relationship corresponding to each level of the height direction onto the image features using the processor.

7. The method of one of claims 1 to 6, wherein the weight is produced at each level based on a score calculated by performing an inner product of each element included in the reference BEV feature and the height BEV feature at each level using the processor.

8. The method of claim 7, wherein the generating of the single enhanced BEV feature comprises:
using the processor to:
calculate an aggregate weight by concatenating and element-wise adding the weight obtained by normalizing the score to a predetermined range and a weight of the reference level;
calculate a similarity for each level by computing a ratio of the weight and the weight of the reference level to the aggregate weight; and
generate the enhanced BEV feature by reflecting the similarity in the reference BEV feature and the height BEV feature of a corresponding level and perform element-wise addition.

9. The method of claim 8, wherein the weight corresponding to the reference level is set to a maximum value.

10. The method of claim 8 or 9, wherein the similarity corresponding to the reference level is set to a maximum value.

11. A mobility device comprising:
a memory configured to store at least one instruction; and
a processor configured to execute the at least one instruction stored in the memory based on data obtained from the memory,
wherein the processor is further configured to:
generate at least one or more image features from at least one or more images through an image analysis model,
produce a reference BEV feature including reference direction information corresponding to a reference level and a BEV feature including height direction information corresponding to each level by mapping the image features and a BEV grid,
calculate a weight based on information included in the reference BEV feature and a height BEV feature,
generate a single enhanced BEV feature by reflecting the calculated weight in the reference BEV feature and the height BEV feature, and
perform autonomous driving control by using the enhanced BEV feature.

12. The mobility device of claim 11, wherein the image feature is generated at a plurality of different scales through an operation between feature maps at different scales derived from an adjacent layer among layers constituting the image analysis model using the processor.

13. The mobility device of claim 11 or 12, wherein the producing of the reference BEV feature and the height BEV feature generates the reference BEV feature and the height BEV feature for each of the image features by mapping the BEV grid and the at least one or more image features independently using the processor.

14. The mobility device of one of claims 11 to 13, wherein the mapping of the BEV grid projects a predefined reference point of each grid cell included in the BEV grid onto the image features based on a transform table that is generated based on geometry information of each camera used for capturing the images using the processor.

15. The mobility device of claim 14, wherein the reference BEV feature is produced by projecting a reference point of each grid cell in the BEV grid defined in a reference direction based on the transform table including a concatenation relationship corresponding to the reference level onto the image features using the processor.

## Amended claims

### Amended claims in accordance with Rule 137(2) EPC.

1. A method performed by an apparatus of a vehicle, the method comprising: using a processor (106) to:
generate (S210) at least one or more image features from at least one or more images through an image analysis model;
produce (S220) a reference Bird's Eye View, BEV, feature including reference direction information corresponding to a reference level and a BEV feature including height direction information corresponding to each level of the levels in the image features by mapping the image features and a BEV grid;
calculate (S230) a weight based on information included in the reference BEV feature and a height BEV feature; and
generate a single enhanced BEV feature using the reference BEV feature and the height BEV feature based on the calculated weight.

2. The method of claim 1, wherein the image feature is generated at a plurality of different scales through an operation between feature maps at different scales derived from an adjacent layer among layers constituting image analysis model using the processor.

3. The method of claim 1 or 2, wherein the producing of the reference BEV feature and the height BEV feature generates the reference BEV feature and the height BEV feature for each of the image features by mapping the BEV grid and the at least one or more image features independently using the processor.

4. The method of one of claims 1 to 3, wherein the mapping of the BEV grid projects a predefined reference point of each grid cell included in the BEV grid onto the image features based on a transform table that is generated based on geometry information of each camera used for capturing the images using the processor.

5. The method of claim 4, wherein the reference BEV feature is produced by projecting a reference point of each grid cell in the BEV grid defined in a reference direction based on the transform table including a concatenation relationship corresponding to the reference level onto the image features using the processor.

6. The method of claim 4, wherein the height BEV feature is produced at each interval by projecting a reference point of each grid cell in the BEV grid defined in a height direction based on the transform table including a concatenation relationship corresponding to each level of the height direction onto the image features using the processor.

7. The method of one of claims 1 to 6, wherein the weight is produced at each level based on a score calculated by performing an inner product of each element included in the reference BEV feature and the height BEV feature at each level using the processor.

8. The method of claim 7, wherein the generating of the single enhanced BEV feature comprises:
using the processor to:
calculate an aggregate weight by concatenating and element-wise adding the weight obtained by normalizing the score to a predetermined range and a weight of the reference level;
calculate a similarity for each level by computing a ratio of the weight and the weight of the reference level to the aggregate weight; and
generate the enhanced BEV feature by reflecting the similarity in the reference BEV feature and the height BEV feature of a corresponding level and perform element-wise addition.

9. The method of claim 8, wherein the weight corresponding to the reference level is set to a maximum value.

10. The method of claim 8 or 9, wherein the similarity corresponding to the reference level is set to a maximum value.

11. l A mobility device comprising:
a memory (104) configured to store at least one instruction; and
a processor (106) configured to execute the at least one instruction stored in the memory (104) based on data obtained from the memory (104),
wherein the processor (106) is further configured to:
generate at least one or more image features from at least one or more images through an image analysis model,
produce a reference Bird's Eye View, BEV, feature including reference direction information corresponding to a reference level and a BEV feature including height direction information corresponding to each level of the levels in the image features by mapping the image features and a BEV grid,
calculate a weight based on information included in the reference BEV feature and a height BEV feature,
generate a single enhanced BEV feature using the reference BEV feature and the height BEV feature based on the calculated weight, and
perform autonomous driving control by using the enhanced BEV feature.

12. The mobility device of claim 11, wherein the image feature is generated at a plurality of different scales through an operation between feature maps at different scales derived from an adjacent layer among layers constituting the image analysis model using the processor (106).

13. laim The mobility device of claim 11 or 12, wherein the producing of the reference BEV feature and the height BEV feature generates the reference BEV feature and the height BEV feature for each of the image features by mapping the BEV grid and the at least one or more image features independently using the processor (106).

14. The mobility device of one of claims 11 to 13, wherein the mapping of the BEV grid projects a predefined reference point of each grid cell included in the BEV grid onto the image features based on a transform table that is generated based on geometry information of each camera used for capturing the images using the processor (106).

15. l The mobility device of claim 14, wherein the reference BEV feature is produced by projecting a reference point of each grid cell in the BEV grid defined in a reference direction based on the transform table including a concatenation relationship corresponding to the reference level onto the image features using the processor (106).
